# FASCICULE DE BREVET EUROPEEN

(11) **EP 3 632 856 B1**
(45) Date de publication et mention de la délivrance du brevet: **27.01.2021**
(21) Numéro de dépôt: 19198890.6
(22) Date de dépôt: 23.09.2019
(51) Int. Cl.: C02F 3/04, B05B 1/20, B05B 13/04

(54) **DISTRIBUTEUR ROTATIF DE LIQUIDE SUR UN MILIEU FILTRANT**
ROTATIONSVORRICHTUNG ZUR VERTEILUNG EINER FLÜSSIGKEIT AUF EIN FILTERMILIEU
ROTARY DISPENSER OF LIQUID ON A FILTER MEDIUM

(30) Priorité: 01.10.2018 FR 1871111
(43) Date de publication de la demande: 08.04.2020
(73) Titulaire: FB Procédés SAS, 44986 Sainte Luce sur Loire Cedex (FR)
(72) Inventeur: Breton, Nicolas, 44980 Sainte Luce sur Loire (FR); Maupetit, Alexandre, 44100 Nantes (FR)
(74) Mandataire: Boüan du Chef du Bos, Louis-Paterne

(56) Documents cités:
- GB-A- 1 461 100

## Description

### Domaine de l'invention

Le domaine de l'invention est celui des dispositifs adaptés pour réaliser le traitement de l'eau ou des liquides.

Plus précisément, l'invention concerne un distributeur rotatif de liquide, destiné à arroser une surface circulaire constituée par un milieu filtrant circulaire.

### Art antérieur

Parmi les différents dispositifs utilisés pour le traitement de l'eau ou des liquides, on connaît des distributeurs rotatifs présentant des bras de distribution, qui s'étendent radialement à partir d'un mât de support formant l'axe de rotation des bras de distribution, et qui présentent des bouches de distribution de liquide réparties sur au moins une partie de leur longueur.

Quand les bras de distribution sont entraînés en rotation, les bouches de distribution permettent l'arrosage de toute la surface surplombée par les bras de distribution. Cette surface arrosée, présentant la forme d'un disque centré sur l'axe de rotation des bras de distribution, est normalement occupée par un milieu filtrant.

La distribution de liquide sur la surface filtrante est faite, selon ce procédé de distribution, de façon lente et intermittente, qui permet un contact important du liquide avec l'air et donc une bonne oxygénation du liquide. Une telle distribution est parfaitement adaptée aux milieux filtrants de type « lits bactériens », comprenant une structure de support, par exemple constituée par une structure en nid d'abeille, dans laquelle se développent des bactéries aptes à éliminer les polluants présents dans l'eau ou le liquide distribué.

Les distributeurs rotatifs de liquide sur des lits bactériens sont couramment utilisés, depuis des dizaines d'années, dans le traitement de l'eau ou des effluents. Ils présentent couramment de grandes dimensions, pouvant aller jusqu'à 50 mètres de diamètre. Le mouvement des bras de distribution peut être généré par un moteur, ou peut être causé par la force de réaction du liquide éjecté par les bouches de distribution. Dans ce cas, les bouches de distribution sont avantageusement orientées de façon à éjecter le liquide dans une direction opposée à la direction souhaitée de déplacement des bras de distribution.

### Inconvénients de l'art antérieur

Quand le mouvement des bras de distribution du distributeur rotatif est commandé par un moteur, une panne ou un arrêt intempestif de ce moteur, par exemple lié à l'interruption de l'alimentation électrique du moteur, peut causer des dommages à ce dispositif.

En effet, en cas d'arrêt brutal du moteur, l'inertie des bras de distribution en rotation, la force de réaction à l'éjection du liquide par les bouches d'éjection, ou l'action du vent sur les bras de distribution peut causer une poursuite du mouvement des bras de distribution, indépendamment du moteur. Ce mouvement peut alors, dans certains cas, endommager gravement le moteur ou le mécanisme de transmission du mouvement entre ce moteur et les bras de distribution.

Par ailleurs, si les bras de distribution sont immobilisés pour une durée trop longue, certaines parties du milieu de filtration peuvent ne pas être arrosées pendant une longue période et sécher. Quand ce milieu de surface de filtration est constitué par un lit bactérien, ce séchage peut entraîner la destruction des bactéries, rendant le lit bactérien inefficient pour une durée importante.

Pour éviter de tels inconvénients, il est parfois prévu que les bras de distribution puissent être désaccouplés du moteur en cas de panne de celui-ci, afin de poursuivre leur rotation librement ou sous l'effet de la réaction à la pression hydraulique d'éjection du liquide, jusqu'à la remise en marche du moteur. Pour réaliser ce désaccouplage, il est généralement prévu d'installer le moteur à la base du mât portant les bras de distribution, et de l'accoupler à ces bras par l'intermédiaire d'une courroie métallique rigide solidaire du mât portant les bras. Un moteur pneumatique équipé de galets rotatifs s'accole à cette courroie rigide, et la rotation des galets contre la courroie entraîne le mât portant les bras. En cas de panne du moteur d'entraînement du distributeur rotatif, le moteur pneumatique retire les galets, ce qui a pour effet de ne plus entraîner la courroie et d'arrêter l'entraînement.

Un tel système de désaccouplage donne généralement satisfaction. Cependant, les dimensions et la masse des bras de distribution entraînent une inertie très importante, ce qui fait que le système de désaccouplage du moteur aux bras doit transmettre des efforts très importants. Il doit en conséquence être dimensionné de telle sorte qu'il nécessite un espace important, ce qui impose de le placer, avec le moteur d'entraînement du distributeur rotatif, au pied du mât central portant les bras de distribution. Ce moteur et la chaîne de transmission, incluant le système de désaccouplage, sont donc constamment arrosés par les bras de distribution. L'humidité qui en résulte génère fréquemment des pannes, dont la réparation est onéreuse et chronophage.

Il existe donc un besoin pour des solutions plus fiables d'entraînement en rotation des bras de distribution et de désaccouplage de cet entraînement GB 1 461 100 A décrit un distributeur rotatif reliant le mécanisme d'embrayage à la pression hydraulique du moteur hydraulique qui entraîne la rotation.

### Objectifs de l'invention

La présente invention a pour objectif de pallier ces inconvénients de l'art antérieur.

En particulier, l'invention a pour objectif de fournir un distributeur rotatif dans lequel le système d'entraînement en rotation des bras de distribution présente une fiabilité améliorée.

Un autre objectif de l'invention est de fournir un tel distributeur rotatif permettant désaccouplage rapide et efficace des bras de distribution et du système d'entraînement en rotation de ces bras, en cas de panne de ce système d'entraînement.

### Exposé de l'invention

Ces objectifs, ainsi que d'autres qui apparaîtront plus clairement par la suite, sont atteints à l'aide d'un distributeur rotatif de liquide, comprenant un mât sensiblement vertical et des bras de distribution s'étendant sensiblement horizontalement à partir du mât, les bras de distribution étant montés pivotant autour du mât, le distributeur rotatif de liquide comprenant également un moteur apte à entraîner en rotation les bras de distribution autour du mât et un mécanisme d'embrayage apte à accoupler le moteur aux bras de distribution, dans une configuration embrayée, ou à désaccoupler le moteur des bras de distribution, dans une configuration débrayée. Selon l'invention, le mécanisme d'embrayage est porté par le mât, au-dessus des bras de distribution, et le mécanisme d'embrayage comporte un pêne mobile entre :
- une première position, correspondant à la configuration embrayée, dans laquelle il est introduit dans une gâche, et
- une seconde position, correspondant à la configuration débrayée, dans laquelle il est retiré hors de la gâche ;
et le mécanisme d'embrayage comporte un électroaimant apte, quand il est alimenté électriquement, à maintenir magnétiquement le pêne dans la gâche, dans la première position.

Il est ainsi possible de mettre en place un mécanisme d'embrayage, ou de désaccouplage, qui est à la fois efficace, simple et robuste. Pouvant n'occuper qu'un espace réduit, il peut être installé, avec le moteur, au-dessus des bras de distribution, ce qui lui permet de ne pas être soumis à des arrosages permanents. La fiabilité du distributeur rotatif de liquide en est améliorée.

Avantageusement, le pêne est monté de façon à passer de la première position à la seconde position sous l'effet de la gravité, quand l'électroaimant n'est pas alimenté électriquement.

Le passage en configuration débrayée se fait donc naturellement et sans risque de panne, dès que l'alimentation de l'électroaimant est coupée.

Avantageusement, le mécanisme d'embrayage comporte des moyens de rappel aptes à entraîner le pêne vers la seconde position, quand l'électroaimant n'est pas alimenté électriquement.

De tels moyens de rappel, par exemple un ou plusieurs ressorts, permettent un passage efficace et rapide en configuration débrayée, dès que l'alimentation de l'électroaimant est coupée. Leur action peut s'ajouter à celle de la gravité, pour faire passer le pêne de la première position à la seconde position. Dans d'autres modes de réalisation, dans lesquels le pêne ne serait pas monté de façon à passer de la première position à la seconde position sous l'effet de la gravité, ce passage de la première position à la seconde position peut n'être fait que sous l'action des moyens de rappel.

Avantageusement, le pêne comprend au moins une partie, destinée à être introduite dans la gâche, qui est réalisée en matériau ferromagnétique doux.

Ainsi, le maintien magnétique du pêne dans la gâche est efficace quand l'électroaimant est alimenté électriquement, et disparaît quand l'électroaimant n'est plus alimenté électriquement.

Avantageusement, le mécanisme d'embrayage comporte des moyens de réglage de la force de rappel exercée par les moyens de rappel sur le pêne, quand le pêne est dans la première position.

Il est ainsi possible de réduire cette force de rappel pour passer plus facilement le pêne de la seconde position à la première position, puis de l'augmenter jusqu'à une valeur assurant un passage rapide et efficace de la première position à la seconde position en cas de coupure d'alimentation de l'électroaimant, tout en restant inférieure à la force d'attraction magnétique de l'électroaimant pour éviter tout passage intempestif de la première position à la seconde position.

Avantageusement, le mécanisme d'embrayage comporte une première portion montée pivotante autour du mât et entraînée en rotation par le moteur, et une seconde portion montée pivotante autour du mât, solidairement aux bras de distribution, et les rotations autour du mât des première et seconde portions sont solidaires dans la configuration embrayée, et indépendantes dans la configuration débrayée.

Avantageusement, dans ce cas, le pêne est porté par l'une des première et seconde portions du mécanisme d'embrayage, et la gâche est formée dans l'autre des première et seconde portions du mécanisme d'embrayage.

Avantageusement, dans ce cas, l'électroaimant est porté par celle des première et seconde portion du mécanisme d'embrayage dans laquelle est formée la gâche.

Avantageusement, le moteur est un moteur électrique, et l'alimentation électrique du moteur et l'alimentation électrique de l'électroaimant sont couplées de telle sorte qu'une coupure de l'alimentation électrique du moteur entraîne la coupure de l'alimentation électrique de l'électroaimant.

Il est ainsi possible d'obtenir le passage dans la configuration débrayée de façon automatique et particulièrement fiable, en cas de coupure d'alimentation électrique du moteur.

Avantageusement, ce distributeur rotatif de liquide comprend un circuit électronique apte à détecter l'occurrence d'une panne du distributeur rotatif de liquide et à couper l'alimentation électrique de l'électroaimant, en cas de détection d'une telle panne.

### Liste des figures

L'invention sera mieux comprise à la lecture de la description suivante de modes de réalisation préférentiels, donnée à titre de simple exemple figuratif et non limitatif, et accompagnée des figures parmi lesquelles :
- la figure 1 est une représentation schématique d'un distributeur rotatif de liquide selon un mode de réalisation de l'invention ;
- la figure 2 est une vue en perspective du mât central du distributeur rotatif de liquide de la figure 1, équipé d'un moteur et d'un mécanisme d'embrayage ;
- la figure 3 est une vue en perspective de la portion de pêne du mécanisme d'embrayage du distributeur rotatif de liquide de la figure 1 ;
- la figure 4 est une vue schématique du sommet du mât central de la figure 2, portant le mécanisme d'embrayage qui est représenté en coupe partielle ;
- la figure 5 est une vue de coupe du mécanisme d'embrayage du distributeur rotatif de liquide de la figure 1, dans une configuration embrayée ;
- la figure 6 est une vue de coupe du mécanisme d'embrayage du distributeur rotatif de liquide de la figure 1, dans une configuration embrayée et armée ;
- la figure 7 est une vue de coupe du mécanisme d'embrayage du distributeur rotatif de liquide de la figure 1, dans une configuration débrayée.

### Description détaillée de modes de réalisation de l'invention

### Distributeur rotatif de liquide

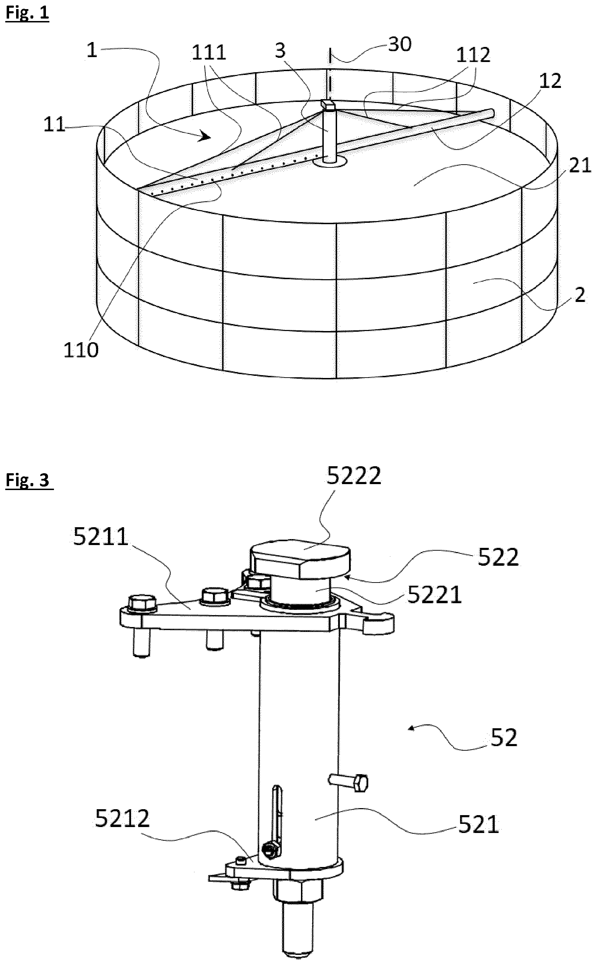

La figure 1 est une représentation schématique d'un distributeur rotatif de liquide 1 selon un mode de réalisation de l'invention. Ce distributeur rotatif de liquide 1 est placé dans une cuve 2 circulaire, qui contient un milieu filtrant 21. De façon préférentielle, ce milieu filtrant 21 peut former un lit bactérien, bien connu en lui-même de l'homme du métier.

Le distributeur rotatif de liquide 1 permet d'arroser le milieu filtrant 21 de façon régulière et intermittente. Il comporte pour cela deux bras de distribution 11 et 12 qui sont fixés à un mât central 3, par l'une de leurs extrémités d'une part et par des haubans 111 et 112 d'autre part, et qui s'étendent chacun, sensiblement horizontalement, jusqu'au bord de la cuve 2. Ces bras de distribution 11 et 12 pivotent autour d'un axe sensiblement vertical défini par la direction longitudinale du mât central 3, appelé par la suite « axe du mât 30 ». Ils présentent chacun une pluralité de bouches d'éjection de liquide 110, réparties sur leur longueur, leur permettant d'arroser les portions du milieu filtrant 21 qu'ils surplombent. En tournant autour du mât central 3, ces bras de distribution peuvent ainsi arroser la totalité du milieu filtrant 21.

Il est à noter que les bouches d'éjection de liquide 110 sont avantageusement placées sur un côté des bras de distribution 11 et 12. Ainsi, quand le liquide est éjecté par ces bouches 110, la pression de cette éjection engendre une force de réaction tendant à faire tourner les bras de distribution 11 et 12 dans la direction opposée à la direction d'éjection des bouches d'éjection 110. Ainsi, sur le bras de distribution 11, les bouches d'éjection 110 sont placées sur une face du bras de distribution visible sur la figure 1. Sur le bras de distribution 12, les bouches d'éjection sont placées sur une face du bras de distribution non visible sur la figure 1. Ces bouches d'éjection tendent à faire tourner les deux bras de distribution, ensemble, autour du mât 3.

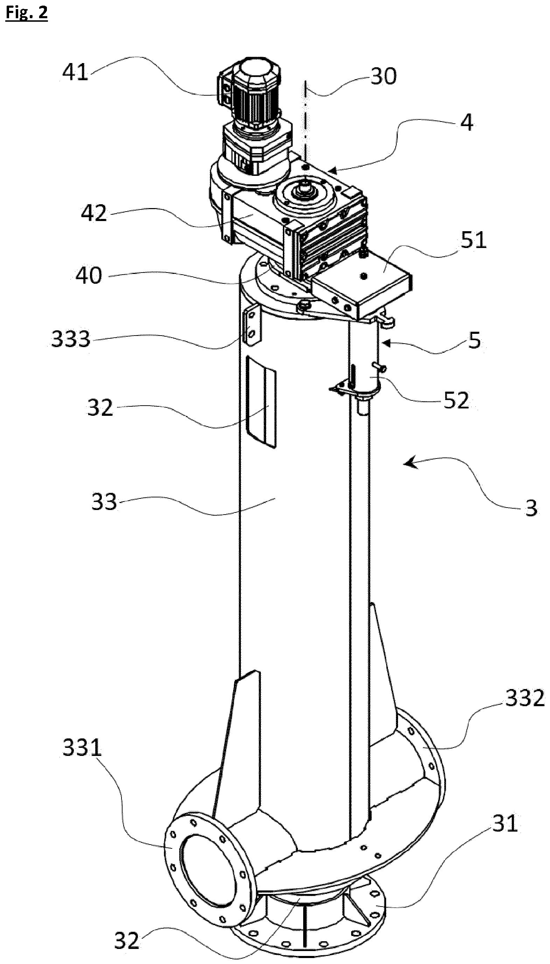

Le mât 3 est représenté plus en détail par la figure 2. Il comprend une base 31 qui est montée fixe dans la cuve 2, et à partir de laquelle s'élève, de façon verticale, une poutre centrale 32 fixe. Cette poutre centrale 32, peu visible sur la figure 2, s'étend sur toute la hauteur du mât 3. La poutre centrale 32 est recouverte par une enveloppe externe 33 sensiblement cylindrique, qui est montée pivotante autour de la poutre centrale 32, autour de l'axe du mât 30. Ce montage peut être effectué à l'aide de roulements ou de paliers adaptés, placés à proximité du sommet et de la base du mât 3.

L'enveloppe externe 33 présente, à proximité de la base du mât 3, des emplacements de fixation 331 et 332 destinés à accueillir les bras de distribution 11 et 12. Il présente également des points d'accrochage 333 permettant la fixation des haubans 111 et 112 maintenant ces bras de distribution.

### Dispositif d'entraînement en rotation

Le mât 3 est équipé, à son sommet, d'un dispositif d'entraînement en rotation 4 permettant d'entraîner en rotation l'enveloppe externe 33 par rapport à la poutre centrale 32. Ce dispositif d'entraînement en rotation 4 est composé d'un moteur 41, qui est ici un moteur électrique, d'un mécanisme de transmission 42, et d'un mécanisme d'embrayage 5. Le moteur 41 et le mécanisme de transmission 42 sont fixés à une platine tournante 40, qui est montée pivotante au sommet de la poutre centrale 32, et entraînent en rotation cette platine 40 par rapport à la poutre centrale 32. Le moteur 41 et le mécanisme de transmission 42, qui sont connus en eux-mêmes, ne sont pas décrits plus en détail.

### Mécanisme d'embrayage

Le mécanisme d'embrayage 5 a pour fonction d'accoupler la platine 40 avec l'enveloppe externe 33, afin que la rotation de la platine 40 entraîne la rotation de l'enveloppe externe 33, ou de les désaccoupler pour leur permettre de pivoter indépendamment l'une de l'autre.

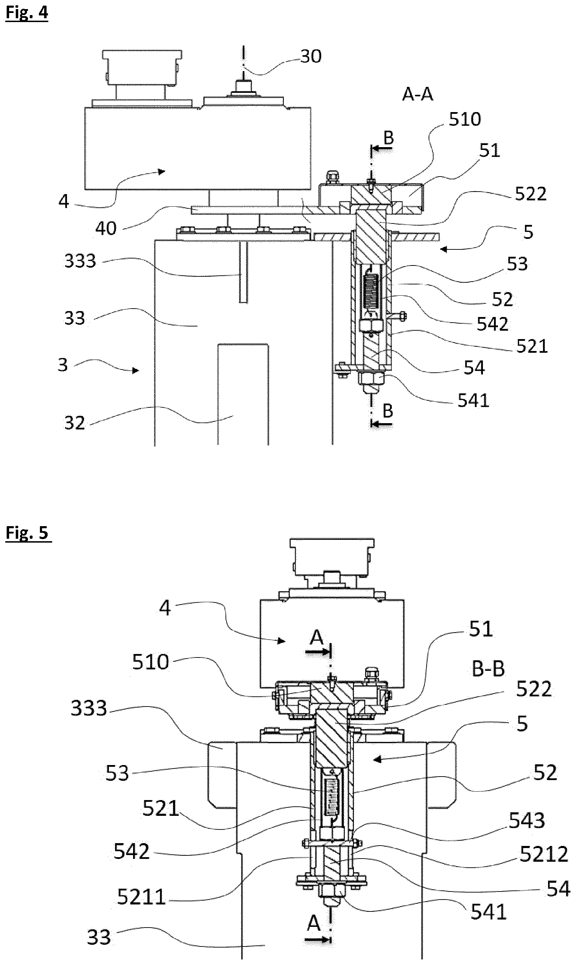

Le mécanisme d'embrayage 5, qui est notamment visible sur la figure 4, comprend une gâche 51, ou portion de gâche 51 et une portion de pêne 52. La gâche 51 est solidaire de la platine 40. La portion de pêne 52 est fixée solidairement à l'enveloppe externe 33. Cette portion de pêne 52 est également représentée par la figure 3. Elle comporte un fourreau 521 sensiblement cylindrique, qui est fixé à l'enveloppe externe 33 par l'intermédiaire de pattes de fixation 5211 et 5212. Un pêne 522 est monté coulissant dans le fourreau 521, entre une position correspondant à une configuration de débrayage, dans laquelle il est en grande partie rentré dans le fourreau 521, et une position correspondant à une configuration d'embrayage dans laquelle il dépasse au-dessus du fourreau 521. Les figures 5, 6 et 7 représentent le mécanisme d'embrayage 5 dans chacune de ces deux configurations.

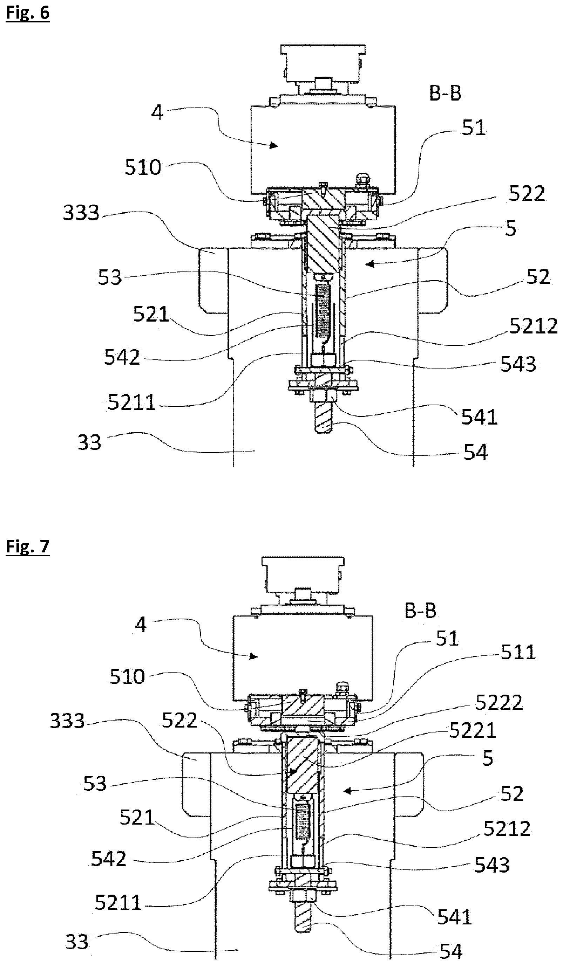

Sur les figures 5 et 6, le pêne 522 est dans sa position correspondant à sa configuration embrayée. Dans cette configuration, l'extrémité supérieure de ce pêne 522 pénètre dans un logement 511 de la gâche 51, de telle sorte que la gâche 51 et la portion de pêne 52 sont rendues solidaires dans leur rotation autour de l'axe du mât 30. Dans ce cas, la rotation du moteur 41, qui entraîne la rotation de la platine 40 par rapport à la poutre centrale 32, entraîne également la rotation de l'enveloppe externe 33 et donc des bras de distribution 11 et 12.

Sur la figure 7, au contraire, le pêne 522 est essentiellement rentré dans le fourreau 521. Dans cette position correspondant à la configuration débrayée, il est retiré hors du logement 511 de la gâche 51. Il n'y a alors plus de contact entre la portion de pêne 52 et la gâche 51 qui peuvent alors pivoter indépendamment l'une de l'autre autour de l'axe du mât 30. Dans cette configuration, l'enveloppe externe 33 est débrayée de la platine 40, et donc du moteur 41.

Dans le mode de réalisation représenté, le pêne 522 est constitué, au moins en partie, d'un matériau ferromagnétique. Ainsi, dans le mode de réalisation représenté, ce pêne 522 est constitué d'un cylindre 5221 à l'extrémité supérieure duquel est fixée une rondelle magnétique 5222 de matériau ferromagnétique doux, qui ne conserve pas d'aimantation. Cette rondelle magnétique 5222 est la partie du pêne 522 qui est destinée à être introduite dans le logement 511 de la gâche 51.

Dans la gâche 51, un électroaimant 510 est placé au fond du logement 511. Quand le pêne 522 est introduit dans le logement 511, l'électroaimant 510, s'il est alimenté électriquement, attire alors la rondelle magnétique 5222 de façon à la maintenir dans le logement 511. De façon préférentielle, l'électroaimant 510 est alimenté par un courant continu de 24 Volts et permet d'exercer une force de 200 kg sur la rondelle magnétique 5222. Cet électroaimant 510 permet donc, quand il est alimenté, de maintenir le mécanisme d'embrayage 5 en configuration embrayée.

Quand l'électroaimant 510 n'est plus alimenté électriquement, la rondelle magnétique 5222 n'est plus maintenue dans le logement 511. Le pêne 522 retombe alors, sous l'effet de la gravité, dans le fourreau 521.

Pour éviter que le pêne 522 ne reste coincé dans le logement 511 en cas de coupure de l'alimentation électrique de l'électroaimant 510, un ressort 53, ou moyen de rappel 53, est prévu entre l'extrémité inférieure du pêne 522 et une vis 54 qui prend appui sur l'extrémité inférieure du fourreau 521. Un écrou 541 permet de régler la longueur de la vis 54 placée à l'intérieur du fourreau 521. Quand cette longueur est importante, comme le représente la figure 5, le ressort 53 n'est pas tendu, même si le pêne 522 est en configuration embrayée. Dans cette configuration, la distance entre le pêne 522 et la vis 54 est définie par la longueur d'une entretoise 542, qui entoure le ressort 53, entre l'extrémité inférieure du pêne 522 et l'extrémité supérieure de la vis 54, de façon à maintenir une distance minimale entre ces deux éléments.

En revanche, si la longueur de la vis 54 placée à l'intérieur du fourreau 521 est réduite, par une rotation de l'écrou 541, comme le représente la figure 6, le ressort 53 est tendu entre la vis 54 et le pêne 522, si ce pêne est en configuration embrayée. La force de rappel de ce ressort 53 est calculée pour être inférieure à la force de traction exercée par l'électroaimant 510 sur la rondelle 5222 du pêne 522. En revanche, quand cet électroaimant 510 n'est plus alimenté électriquement et cesse d'attirer la rondelle 5222, le pêne 522 est ramené en position débrayée par la traction du ressort 53.

### Procédé d'utilisation

Pour la mise en marche du distributeur rotatif de liquide, quand le mécanisme d'embrayage est en configuration débrayée et l'électroaimant 510 est alimenté électriquement, un opérateur commence par faire pivoter manuellement les bras de distribution 11 et 12 jusqu'à aligner la portion de pêne 52 et la gâche 51 du mécanisme d'embrayage 5. Quand le pêne 522 est en face du logement 511, l'opérateur peut passer manuellement ce pêne en configuration embrayée. Pour cela, il commence par dévisser, avec une clé adaptée, l'écrou 541, afin d'augmenter la longueur de la vis 54 pouvant s'introduire dans le fourreau 521. Une tige 543, traversant la vis 54 et des lumières oblongues 5211 et 5212 définies dans les parois du fourreau 521, empêche la rotation de la vis 54 lorsque l'on actionne l'écrou 541. Il pousse ensuite cette vis 54 afin de l'introduire dans le fourreau 521. Lors de cette introduction, la vis 54 pousse vers le haut l'entretoise 542, qui pousse elle-même le pêne 522 vers le haut, vers sa configuration embrayée.

Quand la rondelle magnétique 5222 formant l'extrémité supérieure du pêne 522 s'introduit dans le logement 511 de la gâche 51, elle est attirée par l'électroaimant 510, qui la maintient en position dans le logement 511. Cette configuration est représentée par la figure 5.

L'opérateur peut alors agir sur l'écrou 541 de façon à faire ressortir la vis 54 en dessous du fourreau 521, dans la configuration armée représentée par la figure 6. Ce vissage de l'écrou 541 entraîne la tension du ressort 53, qui tend à attirer le pêne 522 vers la vis 54. Cette traction exercée par le ressort 53 reste cependant inférieure à la traction exercée sur ce pêne 522 par l'électroaimant 510. Dans cette configuration représentée par la figure 6, le mécanisme d'embrayage 5 est embrayé et armé, et le distributeur rotatif de liquide 1 peut être mis en marche et utilisé.

Tant que l'électroaimant 510 est alimenté électriquement, le mécanisme d'embrayage 5 reste dans cette configuration embrayée et armée. En revanche, en cas de coupure de l'alimentation électrique de l'électroaimant 510, celui-ci ne retient plus le pêne 522 dans le logement 511. Le ressort 53 tendu attire alors le pêne 522 vers sa configuration débrayée, essentiellement dans le fourreau 521. Le mécanisme d'embrayage 5 passe alors dans sa configuration débrayée représentée par la figure 7, et ne pourra repasser en configuration embrayée qu'après une nouvelle intervention d'un opérateur. Dans d'autres modes de réalisation possible de l'invention, le passage du pêne de sa configuration embrayée à sa configuration débrayée peut se faire uniquement sous l'effet de la gravité, sans qu'un ressort ne soit nécessaire.

De façon avantageuse, l'alimentation électrique de l'électroaimant 510 est couplée à l'alimentation électrique du moteur 41 de telle sorte que, en cas de coupure de l'alimentation électrique du moteur 41, l'alimentation électrique de l'électroaimant 510 soit également coupée. Le distributeur rotatif de liquide 1 passe ainsi automatiquement en configuration débrayée en cas de coupure électrique, ce qui permet d'éviter les détériorations des mécanismes. Par ailleurs, les bras de distribution peuvent continuer leur rotation, sous l'effet de l'inertie et de la réaction à l'éjection du liquide, ce qui évite de séchage du milieu filtrant.

Il est également possible, de façon alternative ou en complément, de prévoir un circuit électronique apte à détecter différentes configurations de pannes, notamment les pannes indépendantes de l'alimentation électrique du moteur, afin de couper l'alimentation de l'électroaimant 510, et donc de permettre le passage automatique en configuration débrayée, si une telle panne est détectée.

Le mécanisme d'embrayage 5 mis en œuvre sur le distributeur rotatif de liquide 1 permet de protéger ce distributeur rotatif d'une façon particulièrement simple, peu coûteuse et robuste. Les éléments mécaniques mis en œuvre étant extrêmement simples, ils peuvent facilement être dimensionnés de façon à transmettre des efforts très importants. Cette simplicité permet d'éviter les casses ou les coincements de mécanismes. Par ailleurs, malgré sa robustesse, le mécanisme d'embrayage 5 présente un encombrement relativement faible, ce qui lui permet d'être monté, avec le moteur et le mécanisme de transmission, en haut du mât 3. Ces composants ne subissent en conséquence pas les arrosages répétés des bras de distribution, ce qui permet d'augmenter considérablement leur fiabilité et leur durée de vie. Enfin, la consommation électrique de l'électroaimant est très faible, et n'engendre qu'un coût marginal.

## Revendications

1. Distributeur rotatif de liquide (1), comprenant un mât (3) sensiblement vertical et des bras de distribution (11, 12) s'étendant sensiblement horizontalement à partir dudit mât (3), lesdits bras de distribution (11, 12) étant montés pivotant autour dudit mât (3) ;
le distributeur rotatif de liquide (1) comprenant également un moteur (41) apte à entraîner en rotation lesdits bras de distribution (11, 12) autour dudit mât (3), et un mécanisme d'embrayage (5) apte à accoupler ledit moteur (41) auxdits bras de distribution (11, 12), dans une configuration embrayée, ou à désaccoupler ledit moteur (41) desdits bras de distribution (11, 12), dans une configuration débrayée, **caractérisé en ce que** ledit mécanisme d'embrayage (5) est porté par ledit mât (3), au-dessus desdits bras de distribution (11, 12) ;
**en ce que** ledit mécanisme d'embrayage (5) comporte un pêne (522) mobile entre :
- une première position, correspondant à ladite configuration embrayée, dans laquelle il est introduit dans une gâche (51), et
- une seconde position, correspondant à ladite configuration débrayée, dans laquelle il est retiré hors de ladite gâche (51) ;
et **en ce que** ledit mécanisme d'embrayage (5) comporte un électroaimant (510) apte, quand il est alimenté électriquement, à maintenir magnétiquement ledit pêne (522) dans ladite gâche (51), dans ladite première position.

2. Distributeur rotatif de liquide selon la revendication précédente, **caractérisé en ce que** ledit pêne (522) est monté de façon à passer de ladite première position à la seconde position sous l'effet de la gravité, quand ledit électroaimant (510) n'est pas alimenté électriquement.

3. Distributeur rotatif de liquide selon l'une quelconque des revendications précédentes, **caractérisé en ce que** ledit mécanisme d'embrayage (5) comporte des moyens de rappel (53) aptes à entraîner ledit pêne (522) vers ladite seconde position, quand ledit électroaimant (510) n'est pas alimenté électriquement.

4. Distributeur rotatif de liquide selon l'une quelconque des revendications précédentes, **caractérisé en ce que** ledit pêne (522) comprend au moins une partie (5222), destinée à être introduite dans ladite gâche (51), qui est réalisée en matériau ferromagnétique doux.

5. Distributeur rotatif de liquide selon les revendications 3 et 4, **caractérisé en ce que** ledit mécanisme d'embrayage (5) comporte des moyens de réglage de la force de rappel exercée par lesdits moyens de rappel (53) sur ledit pêne (522), quand ledit pêne (522) est dans ladite première position.

6. Distributeur rotatif de liquide selon l'une quelconque des revendications précédentes, **caractérisé en ce que** ledit mécanisme d'embrayage (5) comporte une première portion (51) montée pivotante autour dudit mât (3) et entraînée en rotation par ledit moteur (41), et une seconde portion montée pivotante autour dudit mât (3), solidairement auxdits bras de distribution (11, 12), et **en ce que** les rotations autour dudit mât (3) desdites première et seconde portions sont solidaires dans ladite configuration embrayée et indépendantes dans ladite configuration débrayée.

7. Distributeur rotatif de liquide selon la revendication précédente, **caractérisé en ce que** ledit pêne (522) est porté par l'une desdites première et seconde portions dudit mécanisme d'embrayage (5), et ladite gâche (51) est formée dans l'autre desdites première et seconde portions dudit mécanisme d'embrayage (5).

8. Distributeur rotatif de liquide selon la revendication précédente, **caractérisé en ce que** ledit électroaimant (510) est porté par celle desdites première et seconde portions dudit mécanisme d'embrayage (5) dans laquelle est formée ladite gâche (51).

9. Distributeur rotatif de liquide selon l'une quelconque des revendications précédentes, **caractérisé en ce que** ledit moteur (41) est un moteur électrique, et **en ce que** l'alimentation électrique dudit moteur (41) et l'alimentation électrique dudit électroaimant (510) sont couplées de telle sorte qu'une coupure de l'alimentation électrique dudit moteur (41) entraîne la coupure de l'alimentation électrique dudit électroaimant (510).

10. Distributeur rotatif de liquide selon l'une quelconque des revendications précédentes, **caractérisé en ce qu'**il comprend un circuit électronique apte à détecter l'occurrence d'une panne dudit distributeur rotatif de liquide (1) et à couper l'alimentation électrique dudit électroaimant (510), en cas de détection d'une telle panne.

## Patentansprüche

1. Rotierender Flüssigkeitsverteiler (1), umfassend einen im Wesentlichen vertikalen Mast (3) und Verteilerarme (11, 12), die sich im Wesentlichen horizontal von dem Mast (3) erstrecken, wobei die Verteilerarme (11, 12) schwenkbar um den Mast (3) herum montiert sind;
wobei der rotierende Flüssigkeitsverteiler (1) auch einen Motor (41) umfasst, der in der Lage ist, die Verteilerarme (11, 12) um den Mast (3) zu drehen, und einen Kupplungsmechanismus (5), der in der Lage ist, den Motor (41) mit den Verteilerarmen (11, 12) zu koppeln, und zwar in einer eingekuppelten Konfiguration oder zum Entkuppeln des Motors (41) von den Verteilerarmen (11, 12) in einer ausgekuppelten Konfiguration, **dadurch gekennzeichnet, dass** der Kupplungsmechanismus (5) von dem Mast (3) oberhalb der Verteilerarme (11, 12) getragen wird;
dass der Kupplungsmechanismus (5) einen Bolzen (522) aufweist, der beweglich ist zwischen:
- einer ersten Position, die der eingekuppelten Konfiguration entspricht, in der er in einen Schließhaken (51) eingeführt ist, und
- einer zweiten Position, die der ausgekuppelten Konfiguration entspricht, in der er von dem Schließhaken (51) zurückgezogen ist;
und dass der Kupplungsmechanismus (5) einen Elektromagneten (510) umfasst, der, wenn er elektrisch angetrieben wird, in der Lage ist, den Bolzen (522) in dem Schließhaken (51) in der ersten Position magnetisch zu halten.

2. Rotierender Flüssigkeitsverteiler nach dem vorhergehenden Anspruch, **dadurch gekennzeichnet, dass** der Bolzen (522) so angebracht ist, dass er unter der Wirkung der Schwerkraft von der ersten Position in die zweite Position übergeht, wenn der Elektromagnet (510) nicht elektrisch angetrieben wird.

3. Rotierender Flüssigkeitsverteiler nach einem der vorhergehenden Ansprüche, **dadurch gekennzeichnet, dass** der Kupplungsmechanismus (5) Rückholmittel (53) aufweist, die den Bolzen (522) in die zweite Position mitnehmen können, wenn der Elektromagnet (510) nicht elektrisch angetrieben wird.

4. Rotierender Flüssigkeitsverteiler nach einem der vorhergehenden Ansprüche, **dadurch gekennzeichnet, dass** der Bolzen (522) mindestens ein Teil (5222) umfasst, das dazu bestimmt ist, in den Schließhaken (51) eingeführt zu werden, der aus weichem ferromagnetischem Material besteht.

5. Rotierender Flüssigkeitsverteiler nach Ansprüche 3 und 4, **dadurch gekennzeichnet, dass** der Kupplungsmechanismus (5) Mittel zur Einstellung der Rückholkraft umfasst, die von den Rückholmitteln (53) auf den Bolzen (522) ausgeübt wird, wenn sich der Bolzen (522) in der ersten Position befindet.

6. Rotierender Flüssigkeitsverteiler nach einem der vorhergehenden Ansprüche, **dadurch gekennzeichnet, dass** der Kupplungsmechanismus (5) einen ersten Abschnitt (51), der um den Mast (3) schwenkbar montiert ist und durch den Motor (41) in Drehung versetzt wird, und einen zweiten Abschnitt umfasst, der um den Mast (3) schwenkbar montiert und mit den Verteilerarmen (11, 12) fest verbunden ist, und dass die Drehungen des ersten und des zweiten Abschnitts um den Mast (3) in der eingekuppelten Konfiguration fest verbunden und in der ausgekuppelten Konfiguration unabhängig sind.

7. Rotierender Flüssigkeitsverteiler nach dem vorhergehenden Anspruch, **dadurch gekennzeichnet, dass** der Bolzen (522) von einem der ersten und zweiten Abschnitte des Kupplungsmechanismus (5) getragen wird, und dass der Schließhaken (51) in dem anderen der ersten und zweiten Abschnitte des Kupplungsmechanismus (5) ausgebildet ist.

8. Rotierender Flüssigkeitsverteiler nach dem vorhergehenden Anspruch, **dadurch gekennzeichnet, dass** der Elektromagnet (510) von demjenigen der ersten und zweiten Abschnitte des Kupplungsmechanismus (5) getragen wird, in dem der Schließhaken (51) ausgebildet ist.

9. Rotierender Flüssigkeitsverteiler nach einem der vorhergehenden Ansprüche, **dadurch gekennzeichnet, dass** der Motor (41) ein Elektromotor ist, und dass die Stromversorgung des Motors (41) und die Stromversorgung des Elektromagneten (510) so gekoppelt sind, dass eine Unterbrechung der Stromversorgung des Motors (41) eine Unterbrechung der Stromversorgung des Elektromagneten (510) bewirkt.

10. Rotierender Flüssigkeitsverteiler nach einem der vorhergehenden Ansprüche, **dadurch gekennzeichnet, dass** er eine elektronische Schaltung aufweist, die in der Lage ist, das Auftreten eines Fehlers des rotierenden Flüssigkeitsverteilers (1) zu erfassen und die elektrische Versorgung des Elektromagneten (510) im Falle der Erfassung eines solchen Fehlers zu unterbrechen.

## Claims

1. A rotary liquid distributor (1), comprising a substantially vertical mast (3) and distribution arms (11, 12) extending substantially horizontally from said mast (3), said distribution arms (11, 12) being mounted so as to pivot about said mast (3);
the rotary liquid distributor (1) also comprising a motor (41) that is capable of rotating said distribution arms (11, 12) about said mast (3), and an engagement mechanism (5) that is capable of coupling said motor (41) to said distribution arms (11, 12) in an engaged configuration or uncoupling said motor (41) from said distribution arms (11, 12) in a disengaged configuration,
**characterized in that** said engagement mechanism (5) is supported by said mast (3) above said distribution arms (11, 12);
**in that** said engagement mechanism (5) comprises a bolt (522) that can be moved between:
- a first position, corresponding to said engaged configuration, in which it is introduced into a striker (51), and
- a second position, corresponding to said disengaged configuration, in which it is withdrawn from said striker (51);
and **in that** said engagement mechanism (5) comprises an electromagnet (510) that is capable, when supplied with electricity, of magnetically holding said bolt (522) in said striker (51) in said first position.

2. The rotary liquid distributor according to the preceding claim, **characterized in that** said bolt (522) is mounted so as to pass from said first position to the second position under the effect of gravity when said electromagnet (510) is not supplied with electricity.

3. The rotary liquid distributor according to either of the preceding claims, **characterized in that** said engagement mechanism (5) comprises return means (53) that are capable of driving said bolt (522) toward said second position when said electromagnet (510) is not supplied with electricity.

4. The rotary liquid distributor according to any of the preceding claims, **characterized in that** said bolt (522) comprises at least one part (5222) that is intended to be introduced into said striker (51) and is made of soft ferromagnetic material.

5. The rotary liquid distributor according to claims 3 and 4, **characterized in that** said engagement mechanism (5) comprises means for adjusting the return force exerted by said return means (53) on said bolt (522) when said bolt (522) is in said first position.

6. The rotary liquid distributor according to any of the preceding claims, **characterized in that** said engagement mechanism (5) comprises a first portion (51) that is mounted so as to pivot about said mast (3) and rotated by said motor (41), and a second portion that is mounted so as to pivot about said mast (3) together with said distribution arms (11, 12), and **in that** the rotations about said mast (3) of said first and second portions are together in said engaged configuration and independent in said disengaged configuration.

7. The rotary liquid distributor according to the preceding claim, **characterized in that** said bolt (522) is supported by one of said first and second portions of said engagement mechanism (5), and **in that** said striker (51) is formed in the other of said first and second portions of said engagement mechanism (5).

8. The rotary liquid distributor according to the preceding claim, **characterized in that** said electromagnet (510) is supported by that of said first and second portions of said engagement mechanism (5) in which said striker (51) is formed.

9. The rotary liquid distributor according to any of the preceding claims, **characterized in that** said motor (41) is an electric motor, and **in that** the electric supply of said motor (41) and the electric supply of said electromagnet (510) are coupled such that an interruption in the electric supply to said motor (41) results in an interruption in the electric supply to said electromagnet (510).

10. The rotary liquid distributor according to any of the preceding claims, **characterized in that** it comprises an electronic circuit that is capable of detecting the occurrence of a failure of said rotary liquid distributor (1) and of interrupting the electric supply to said electromagnet (510) if such a failure is detected.
